# EUROPÄISCHE PATENTSCHRIFT

(11) **EP 0 658 708 B1**
(45) Veröffentlichungstag und Bekanntmachung des Hinweises auf die Patenterteilung: **22.07.1998**
(21) Anmeldenummer: 94118071.3
(22) Anmeldetag: 16.11.1994
(51) Int. Cl.: F16H 59/72, F16H 41/30, F16H 57/04

(54) **Anordnung zum Steuern der Temperatur eines hydraulischen Betriebsmittels für ein selbsttätig schaltendes Getriebe und einen hydrodynamischen Drehmomentwandler**
Arrangement for temperature control of hydraulic fluid in an automatic gearbox and torque converter
Système pour le contrôle de la température du fluide hydraulique d'une boîte de vitesses automatique et convertisseur de couple

(30) Priorität: 16.12.1993 DE 4342961
(43) Veröffentlichungstag der Anmeldung: 21.06.1995
(73) Patentinhaber: DAIMLER-BENZ AKTIENGESELLSCHAFT, 70567 Stuttgart (DE)
(72) Erfinder: Schröder, Rolf, Dipl.-Ing., D-70619 Stuttgart (DE)

(56) Entgegenhaltungen:
- DE-A- 3 323 158
- GB-A- 1 149 547
- US-A- 3 063 245
- US-A- 3 659 687
- US-A- 3 724 294
- US-A- 5 110 045

## Beschreibung

Die Erfindung bezieht sich auf eine Anordnung nach dem Oberbegriff von Patentanspruch 1, wie aus der GB-A-1 149 547 bekannt.

Bei einer anderen bekannten Anordnung der eingangs genannten Art (JP-A 1-6558) ist die vom Kühler abgehende Kühlerrücklaufleitung über das Steuerventil mit der mit dem Getriebe direkt verbundenen Leitung verbunden, so daß in der unteren Temperaturphase der Kühler vollkommen abgeschaltet ist und das Arbeitsöl vom Drehmomentwandler direkt zum Getriebe zurückströmt. Dies hat bei einem Kaltstart eines Kraftfahrzeuges den Nachteil, daß sich das Arbeitsöl im Getriebe insbesondere im Teillastbetrieb nur langsam erwärmen kann, weil der von dem sich wesentlich schneller erwärmenden Kühlwasser des Motores durchströmte Kühler abgeschaltet ist und somit zur Erwärmung des Arbeitsöles nichts beitragen kann. Das bekannte Steuerventil hat nur zwei Arbeitsstellungen für das Zu- und Abschalten des Kühlers, eine besondere Beeinflussung der Temperatur des Arbeitsöles im Drehmomentwandler unabhängig von den Bedingungen im Getriebe ist weder vorgesehen noch möglich.

Der Übertragungswirkungsgrad eines Drehmomentwandlers ist abhängig von der Öltemperatur. Niedrige Temperaturen verschlechtern den Wirkungsgrad und damit dem Kraftstoffverbrauch des Fahrzeuges erheblich. Ebenso werden auch die anderen Wandlerkennwerte wie Momentenaufnahme und Wandlung usw. und dadurch das dynamische Verhalten des Fahrzeuges bei niedrigen Öltemperaturen verschlechtert.

Bei der bekannten Anordnung lassen sich die Temperaturen von Getriebe und Wandler nicht den jeweiligen Einzelanforderungen entsprechend unabhängig voneinander regeln. Die große Wärmekapazität des Gesamtsystems bedingt deshalb lange Aufheizzeiten, um die Betriebstemperatur zu erreichen. Während der langen Aufwärmzeiten verursacht der Wandler hohe Verluste.

Weiterhin ist bei der bekannten Anordnung die stationäre Betriebstemperatur auf die Erfordernisse des Getriebes ausgelegt, was dazu führt, daß im häufig gefahrenen Teillastbereich (Stadtverkehr/Geschwindigkeiten bis ca. 160 km/h etc.) eine Systemtemperatur von nur etwa 70 bis 90°C erreicht wird.

Aus der DE 33 23 158 Al ist eine gattungsfremde Aufwärmebeschleunigungsvorrichtung für Automatic-Getriebe mit einem Drehmomentwandler bekannt. Diese bekannte Vorrichtung arbeitet mit einer Einlaßleitung zur Verbindung zwischen einem Öleinlaß des Drehmomentwandlers und einem Auslaß einer Hydropumpe, die von einem Motor angetrieben wird, und einer Auslaßleitung zur Verbindung zwischen einem Ölauslaß des Drehmomentwandlers und einem Öltank, welche Auslaßleitung an ihrem Mittelteil mit einem Ölkühler versehen ist.
Hauptaufgabe dieser bekannten Aufwärmebeschleunigungsvorrichtung ist es, eine Umgehungsleitung von der Auslaßleitung abzuzweigen, die vom Drehmomentwandler auf der Stromaufwärtsseite des Ölkühlers führt, wobei die Umgehungsleitung im Betrieb während des Aufwärmvorganges unmittelbar nach dem Anlassen des Motores in kalter Umgebung geöffnet werden kann, damit ein Teil des Öles oder das ganze Öl, das aus dem Drehmomentwandler abgeleitet wird, zur direkten Rückführung zum Öltank unter Umgehung des Ölkühlers gebracht wird, so daß die durch den Drehmomentwandler erzeugte Wärme wirksam gesammelt wird, um das Aufwärmen des Automatic-Getriebes zu beschleunigen.
Zu diesem Zweck ist bei der bekannten Aufwärmebeschleunigungsvorrichtung eine Umgehungsleitung, die von der Auslaßleitung an einem Teil stromaufwärts des Ölkühlers abgezweigt ist und zu dem erwähnten Öltank führt, und ein Umgehungsventil in Verbindung mit der Umgehungsleitung zum Öffnen der Umgehungsleitung beim Aufwärmen des Automatic-Getriebes vorgesehen, wobei das Umgehungsventil ein auf die Temperatur ansprechendes Ventil ist, das ein temperaturempfindliches Element aufweist und die Umgehungsleitung öffnen kann, wenn die Umgebungstemperatur unter einen bestimmten Wert abgesunken ist.
Die der Erfindung zugrunde liegende Aufgabe besteht im wesentlichen darin, die temperaturabhängigen inneren Wandlerströmungsverluste zu verringern und dadurch den Kraftstoffverbrauch des Fahrzeuges zu senken.

Ausgehend von einer Anordnung nach dem Oberbegriff von Patentanspruch 1 ist die erläuterte Aufgabe gemäß der Erfindung in vorteilhafter Weise mit den kennzeichnenden Merkmalen von Patentanspruch 1 gelöst.

Bei der Anordnung nach der Erfindung wird der Kraftstoffverbrauch des Fahrzeuges verringert, indem die Betriebstemperatur des Arbeitsöles in der Kaltstartphase schneller erreicht und auf ein konstantes, gegenüber dem Temperaturniveau im Getriebe unabhängiges, insbesondere höheres Temperaturniveau geregelt wird. Die Verringerung der Verluste ergibt sich hierbei aus der Verringerung der Ölviskosität bei höheren Temperaturen.

Bei der Anordnung nach der Erfindung ist eine höhere stationäre Betriebstemperatur im Drehmomentwandler mit einer im wesentlichen gleichbleibenden Regeltemperatur durch die Maßnahme nach Patentanspruch 2 in besonders vorteilhafter Weise erreicht.

Bei der Anordnung nach der Erfindung ist eine von der Betriebstemperatur im Getriebe unabhängige Einstellung und Regelung der Betriebstemperatur im Drehmomentwandler erreicht.

Bei der Anordnung nach der Erfindung wird zur schnelleren Erwärmung und zum schnelleren Erreichen einer höheren Endtemperatur des Wandleröls die innere Wandlerverlustleistung ausgenutzt. Die Durchströmung (Frischölversorgung) und damit Kühlung des Wandlers wird unterhalb der gewünschten Temperatur durch die Erfindung verhindert. Das heißt, die gesamten Wandlerverluste dienen in der Kaltphase zur schnellen Erwärmung des Wandlers und des in ihm befindlichen Öls, der Wandler erwärmt sich selbst. Durch die innere Verlustleistung kann ebenso eine gegenüber dem Getriebe höhere Temperatur des Wandlers in der mittleren Temperaturphase erreicht werden, ohne daß eine äußere Wärmezufuhr hierzu erforderlich ist.

Bei der Anordnung nach der Erfindung kann das Steuerventil als 4-Wege-Ventil ausgeführt und in den Ölkreislauf des Getriebes integriert sein. Das Steuerventil kann sich im allgemeinen außerhalb des Wandlers befinden und wird z.B. mit Hilfe eines Bimetall-Stellgliedes in Abhängigkeit von der Temperatur gesteuert. Das Steuerventil arbeitet so, daß in der unteren Temperaturphase der Wandlerzu- und der Wandlerrücklaufkanal verbunden sind. Dadurch wird ein vom Getriebe abgeschlossener Sekundärölkreislauf ermöglicht, der durch die innere Pumpwirkung des Wandlers aufrechterhalten wird. Die Strömungsrichtung innerhalb des Sekundärkreislaufes ist abhängig vom Lastzustand (Zug- oder Schubbetrieb). Der Sekundärkreislauf dient dazu, die Wandleröltemperatur außerhalb des Wandlers identifizieren zu können, die Sekundärölströmung wird über ein Termostatelement z.B. eine Bimetallfeder geführt.

Der Sekundärkreislauf hat gemäß Patentanspruch 10 eine Verbindung mit dem Getriebe, um einen bestimmten statischen Öldruck im Wandler zu erreichen. In der unteren Temperaturphase wird das Wandleröl innerhalb des Sekundärkreislaufes umgewälzt. Ein stationärer Ölaustausch zwischen Wandler und Getriebe kann in der unteren Temperaturphase nicht stattfinden. Der gesamte Primärölstrom vom Getriebe wird unter Umgehung des Wandlers direkt zum Ölkühler geleitet. Zur Gewährleistung, daß die Luft aus dem Wandler bei Neubefüllung oder nach Getriebeölwechsel entweichen kann, ist die Ausgestaltung nach Patentanspruch 9 getroffen.

Durch die innere hydrodynamische Kreislaufströmung des Wandlers zur Übertragung des Motormomentes bildet sich entsprechend der Strömungsgeschwindigkeit, der Strömungsrichtung und der Geometrie der Wandlerlaufräder eine Druckdifferenz zwischen Wandlerzu- und -rücklaufkanal. Bei üblichen Serienwandlern ist im Zugbetrieb der Druck im Wandlerrücklauf durch den Staudruck höher, d. h. der Wandler "pumpt". Im Schubbetrieb kehren sich die Druckverhältnisse um.

Nach Erreichen der mittleren Temperaturphase (ca. 100 bis 120°C) gemäß den Patentansprüchen 3 und 4 werden bei der Anordnung nach der Erfindung die an das Steuerventil angeschlossenen Leitungen derart miteinander verbunden, daß dem Sekundärkreislauf kühleres Getriebeöl zugemischt wird. Jeweils ein Teil des Öls aus dem Getriebe und dem Wandler wird an den Ölkühler abgeführt. Die Wandleröltemperatur wird gemäß Patentanspruch 6 durch die bimetallgesteuerte Stellung des Steuerventiles konstant geregelt. Es bilden sich die Ölströmungen zwischen den Kanälen gemäß Patentanspruch 2 aus.

In der oberen Temperaturphase erreicht oder überschreitet die Getriebeöltemperatur die gewünschte Wandlerregeltemperatur. In dieser oberen Temperaturphase wird der gesamte Ölstrom vom Getriebe durch den Wandler geleitet.

Bei der Anordnung nach der Erfindung kann das Steuerventil gemäß Patentanspruch 5 als 4-Wege-Ventil ausgebildet sein, bei dem die Lage des Steuerkolbens die Verbindungsquerschnitte der verschiedenen Kanäle untereinander bestimmt.

Die Lage des Steuerkolbens kann durch eine Bimetallfeder entsprechend der Temperatur bestimmt sein.

Eine Rückstellfeder aus einem normalen monometallischen Werkstoff dient dazu, den Steuerkolben in Eingriff mit der Bimetallfeder zu bringen. Bei direkter mechanischer Bindung zwischen Bimetall und Steuerkolben kann eine Rückstellfeder entfallen.

Es ist vorteilhaft, den Weg des Steuerkolbens durch Anschläge zu begrenzen.

Die bauliche Anordnung des Steuerventils kann z.B. in einem Primärpumpendeckel des Getriebes vorgesehen sein.

Bei einer Ausführungsform der Erfindung gemäß den Patentansprüchen 13 und 14 ist für das Steuerventil ein 4-Wege-Drehschieberventil vorgesehen, bei dem die Ventilanschlüsse in einer gemeinsamen Axialebene liegen, welche auch die Drehachse enthält.

Bei einer weiteren Ausführungsform der Erfindung nach Patentanspruch 15 kann das Steuerventil als 4-Wege-Drehschieberventil mit Anordnung der Ventilanschlüsse in einer drehachsnormalen Ebene ausgebildet sein.

Bei der Anordnung nach der Erfindung kann auch eine hydraulische oder elektrische Ansteuerung des Steuerventiles vorgesehen sein, wobei die Betätigung des Ventiles elektrisch oder hydraulisch erfolgt. Eine derartige Ansteuerung würde einen zusätzlichen Temperatursensor im Sekundärölkreislauf sowie eine Auswerte- und Ansteuerungselektronik/-hydraulik erforderlich machen.

Einzelheiten der Erfindung ergeben sich aus der nachstehenden Beschreibung von drei in der Zeichnung schematisch dargestellten Ausführungsformen. In der Zeichnung bedeuten
- Fig. 1: einen axialen Teilschnitt durch ein Antriebsaggregat eines Kraftfahrzeuges mit einer Anordnung nach der Erfindung in einer ersten Ausführungsform,
- Fig. 2: ein Blockschaltbild der Anordnung nach der Erfindung in der ersten Ausführungsform,
- Fig. 3: die Darstellung der Arbeitsweise der Anordnung von Fig. 2 in drei verschiedenen Temperaturphasen (Fign. 3A bis 3C),
- Fig. 4: einen die Drehachse enthaltenden Axialschnitt durch ein als Steuerventil verwendetes erstes Drehschieberventil als eine zweite Ausführungsform der Anordnung nach der Erfindung,
- Fig. 5: einen Querschnitt durch das Drehschieberventil von Fig. 4 nach Linie V-V,
- Fig. 6: einen Querschnitt durch das Drehschieberventil von Fig. 4 nach Linie VI-VI,
- Fig. 7: einen Querschnitt durch das Drehschieberventil von Fig. 4 nach Linie VII-VII,
- Fig. 8: einen Querschnitt durch das Drehschieberventil von Fig. 4 nach Linie VIII-VIII,
- Fig. 9: einen drehachsnormalen Schnitt durch ein als Steuerventil verwendetes zweites Drehschieberventil als eine dritte Ausführungsform der Anordnung nach der Erfindung, und
- Fig. 10: einen Querschnitt durch das Drehschieberventil von Fig. 9 nach Linie X-X.

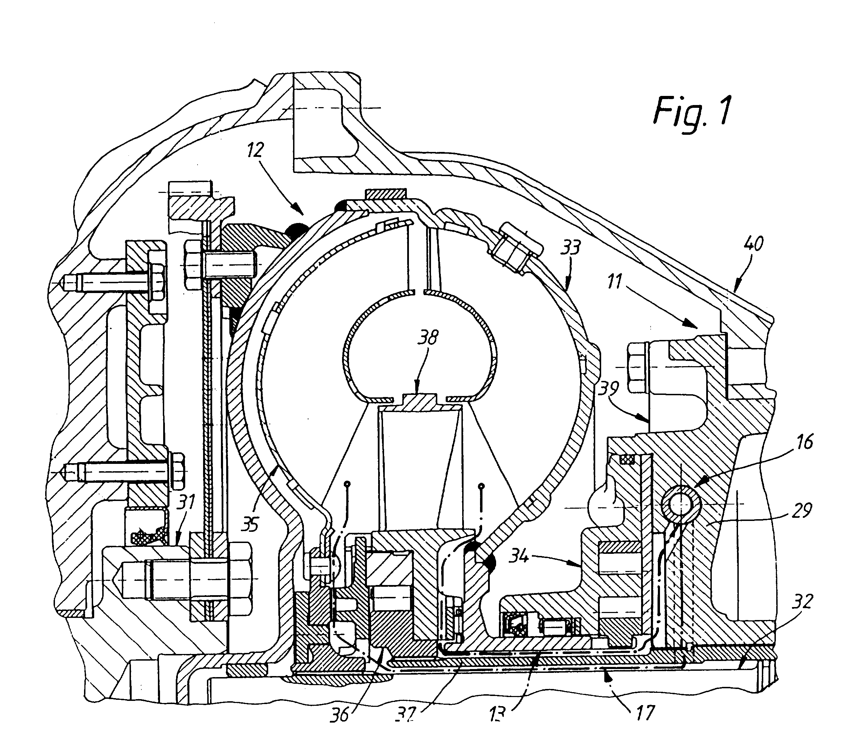

Unter Bezugnahme auf Fig. 1 weist ein Antriebsaggregat eines Kraftfahrzeuges einen Antriebsmotor mit einer Kurbelwelle 31, einen von der Kurbelwelle 31 angetriebenen hydrodynamischen Drehmomentwandler 12 mit einer Turbinenradwelle 32 und ein von der Turbinenradwelle 32 angetriebenes selbsttätig schaltendes Getriebe 11 mit einer von der Kurbelwelle 31 über ein zu letzterer drehfest angeordnetes Pumpenrad 33 des Drehmomentwandlers 12 angetriebenen Primärpumpe 34 für die Versorgung des Getriebes 11 und des Drehmomentwandlers 12 mit Arbeitsöl auf.

Der Drehmomentwandler 12 weist einen inneren hydrodynamischen Arbeitskreislauf auf, der in der üblichen Weise von dem jeweiligen Schaufelgitter des Pumpenrades 33, eines mit der Turbinenradwelle 32 drehfest verbundenen Turbinenrades 35 und eines durch eine Freilaufkupplung 36 an einer nichtdrehenden Statorwelle 37 in der zur Antriebsdrehrichtung entgegengesetzten Drehrichtung abstützbaren Leitrades 38 aufrechterhalten wird. Mit diesem hydrodynamischen Arbeitskreislauf steht an einer ersten Stelle - die zwischen dem Pumpenradeintritt und dem Leitradaustritt liegt - eine Wandlerzulaufleitung 13 in Verbindung, welche an ein thermostatisches Steuerventil 16 angeschlossen ist, das mit seinem Ventilgehäuse 29 in eine aufrechte Gehäusezwischenwand 39 des Getriebegehäuses 40 des Getriebes 11 integriert ist. An das Steuerventil 16 ist eine Wandlerrücklaufleitung 17 angeschlossen, welche mit einer zweiten Stelle des hydrodynamischen Arbeitskreislaufes - die zwischen dem Turbinenradaustritt und dem Leitradeintritt liegt - in Verbindung steht. Die in einer Ausnehmung der dem Drehmomentwandler 12 zugekehrten Stirnfläche der Gehäusezwischenwand 39 aufgenommene Primärpumpe 34 saugt Arbeitsöl in bekannter Weise aus einem Ölsumpf des Getriebes 11 an; ferner steht die Primärpumpe 34 auf ihrer Förderseite über Druckregelorgane in bekannter Weise mit hydraulischen Stellgliedern und Schmierstellen des Getriebes 11 sowie mit einer zum Steuerventil 16 führenden Leitung 19 in Verbindung.

Das Antriebsaggregat weist schließlich noch einen vom Kühlwasser des Motors durchströmten Ölkühler 14 für die Wärmeabgabe des Arbeitsöles bei normalen Betriebsbedingungen auf, der durch eine Kühlerrücklaufleitung 15 für das Arbeitsöl mit dem Getriebe 11 und durch eine Kühlervorlaufleitung 18 für das Arbeitsöl mit dem Steuerventil 16 verbunden ist.

Das Steuerventil 16 bei der ersten Ausführungsform der Fign. 1 bis 3 weist einen Steuerkolben 21 der Axialkolbenbauart mit vier Steuerkanten 21_1 bis 21_4 sowie einen Ventilanschluß 16_13 für die Wandlerzulaufleitung 13, einen Ventilanschluß 16_17 für die Wandlerrücklaufleitung 17, einen Ventilanschluß 16_18 für die Kühlervorlaufleitung 18 sowie einen Ventilanschluß 16_19 für die direkt zum Getriebe 11 führende Leitung 19 auf.

Der Steuerkolben 21 unterteilt eine Ventilbohrung des Ventilgehäuses 29 in zwei stirnseitig liegende Ventilkammern 22 und 41, welche durch einen axialen Ventildurchgang 23 des Steuerkolbens 21 miteinander verbunden sind. Mit der Ventilkammer 22 steht der Ventilanschluß 16-17 für die Wandlerrücklaufleitung 17 in ständig offener Verbindung. Der Steuerkolben 21 ist an seinem einen Stirnende über eine in der Ventilkammer 22 aufgenommene Bimetallfeder 20 und an seinem anderen Stirnende über eine in der Ventilkammer 41 aufgenommene normale Metallfeder 26 jeweils gegenüber dem Ventilgehäuse 29 abstützbar.

Die Steuerkante 21_1 liegt wirkungsmäßig zwischen den Ventilanschlüssen 16_13 und 16_17. Die Steuerkante 21_2 liegt wirkungsmäßig zwischen den Ventilanschlüssen 16_13 und 16_19. Die Steuerkante 21_3 liegt wirkungsmäßig zwischen den Ventilanschlüssen 16_19 und 16_18. Die Steuerkante 21_4 liegt wirkungsmäßig zwischen der Ventilkammer 22 und dem Ventilanschluß 16_18.

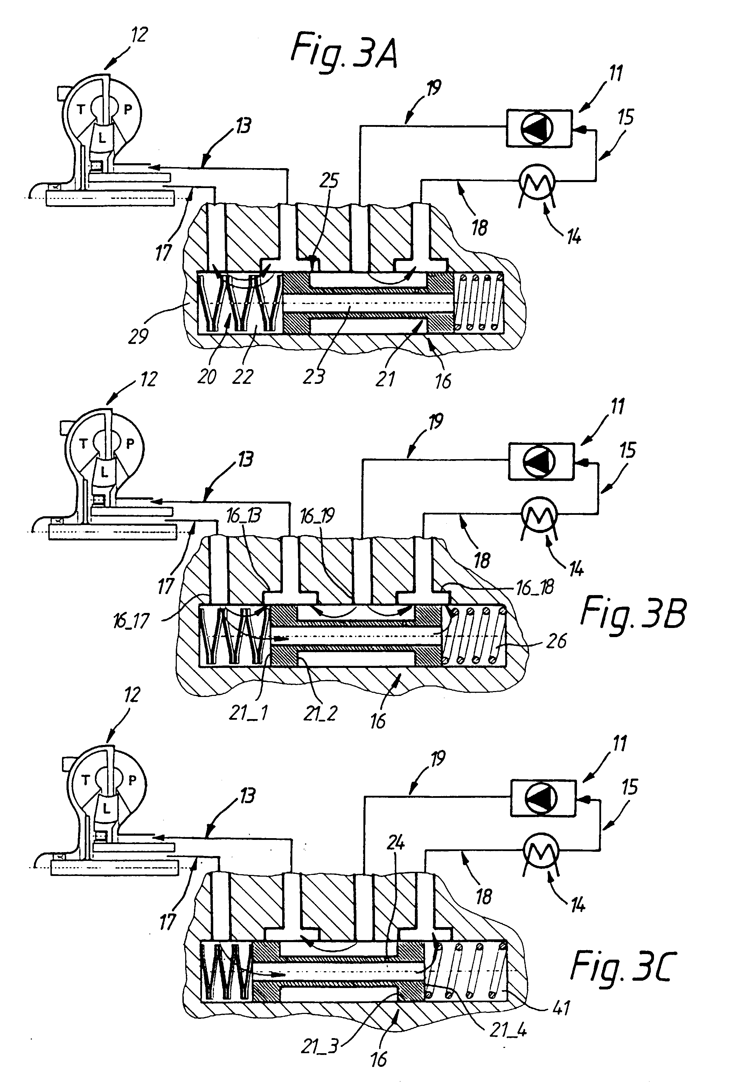

Die Kennung der Bimetallfeder 20 und die Lage der Steuerkanten 21_1 bis 21_4 zu den jeweils zugehörigen Ventilanschlüssen sind so auf die Temperatur des Arbeitsöles im Drehmomentwandler 12 abgestimmt, daß
- (A): in einer unteren Temperaturphase gemäß Fig. 3(A), welche Temperaturen niedriger als ein erster Grenzwert T_G1 ≅ 100°C umfaßt, einerseits die Wandlerzulaufleitung 13 mit der Wandlerrücklaufleitung 17 und andererseits die direkt mit dem Getriebe 11 verbundene Leitung 19 mit der Kühlervorlaufleitung 18 verbunden ist; hierbei ist die Steuerkante 21_2 so angeordnet, daß eine ständige Druckverbindung zwischen der Leitung 19 höheren Druckes zu der Leitung 13 niedrigeren Druckes aufrechterhalten bleibt, um einen bestimmten Druck im hydrodynamischen Arbeitskreislauf sicherzustellen;
- (B): in einer mittleren Temperaturphase gemäß Fig. 3(B), welche Temperaturen höher als der erste Grenzwert T_G1 und niedriger als ein zweiter Grenzwert T_G2 ≅ 120°C umfaßt, einerseits die Wandlerrücklaufleitung 17 sowohl mit der Wandlerzulaufleitung 13 als auch mit der Kühlervorlaufleitung 18 und andererseits die mit dem Getriebe 11 direkt verbundene Leitung 19 sowohl mit der Wandlerzulaufleitung 13 als auch mit der Kühlervorlaufleitung 18 verbunden sind, während
- (C): in einer oberen Temperaturphase gemäß Fig. 3(C), welche Temperaturen höher als der zweite Grenzwert T_G2 umfaßt, die Wandlerrücklaufleitung 17 nur noch mit der Kühlervorlaufleitung 18 und die mit dem Getriebe 11 direkt verbundene Leitung 19 nur noch mit der Wandlerzulaufleitung 13 verbunden sind.

Um zu gewährleisten, daß im Drehmomentwandler 12 enthaltene Lufteinschlüsse entweichen können, ist eine Entlüftungsöffnung 24 im Ventildurchgang 23 vorgesehen, über welche die Lufteinschlüsse entweder bereits im Kühler 14 oder im Vorratsbehälter des Getriebes 11 abgeschieden werden.

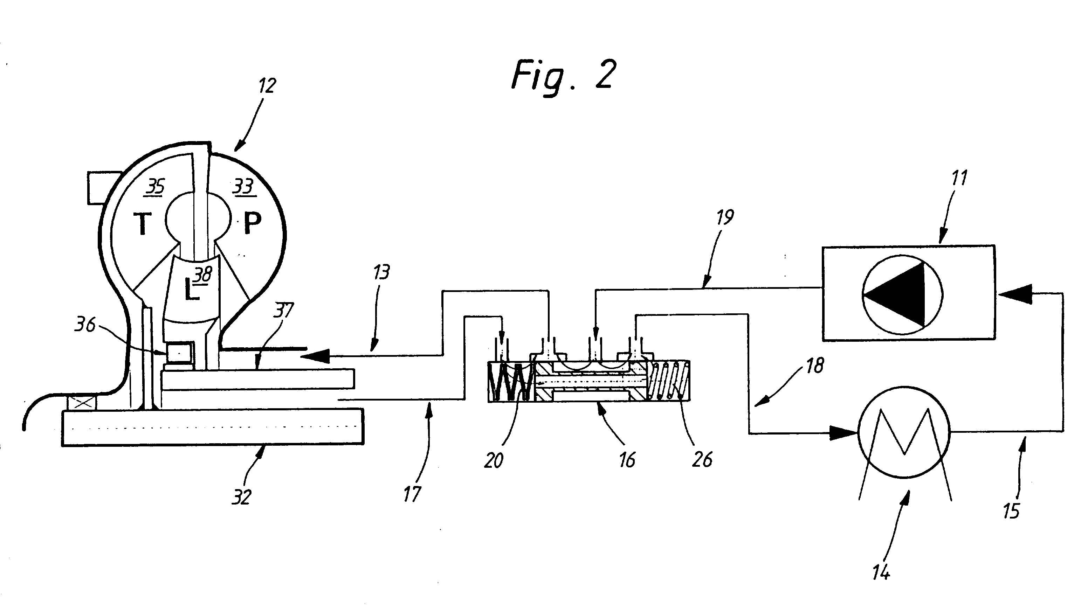

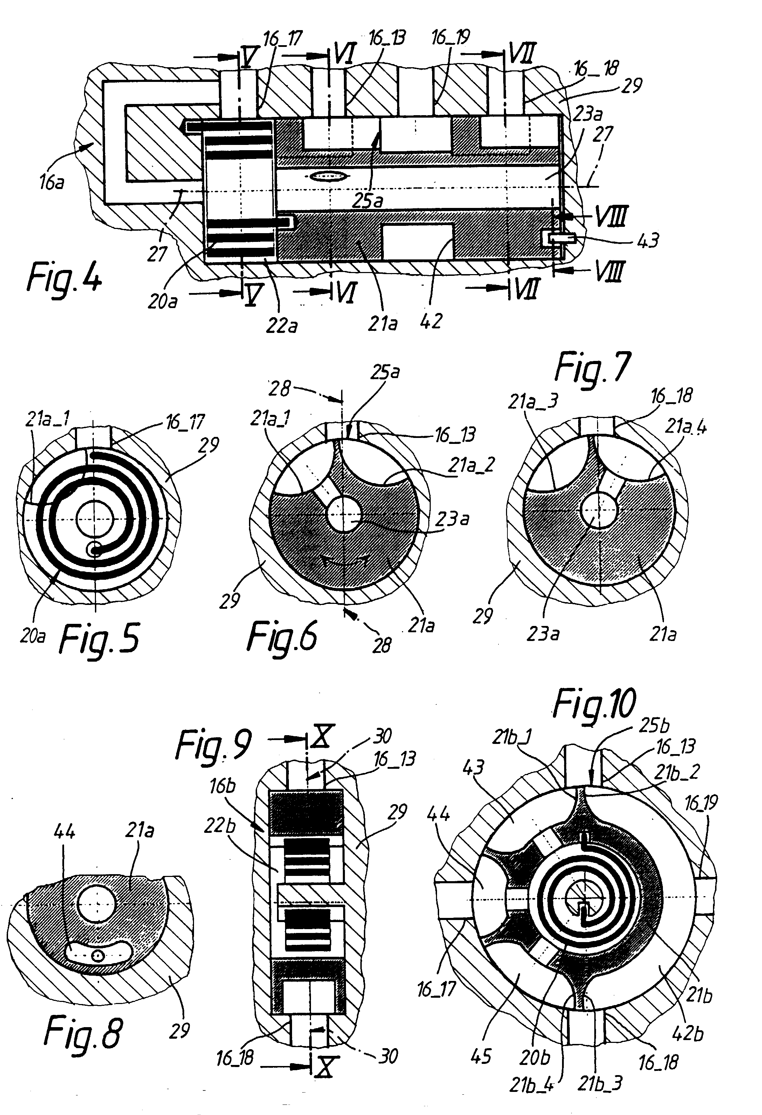

Bei der Ausführungsform der Fign. 4 bis 8 ist als Steuerventil ein Drehschieberventil 16a verwendet, bei welchem die Ventilanschlüsse 16_13 und 16_17 bis 16_19 für die Leitungen 13 und 17 bis 19 gemäß Fig. 2 in der gleichen Weise wie bei der Ausführungsform der Fign. 1 bis 3 in einer (die Drehachse 27-27 enthaltenden) Gehäuseebene 28-28 des Ventilgehäuses 29 angeordnet sind. Ein in einer Ventilbohrung des Ventilgehäuses 29, in welche alle Ventilanschlüsse wie bei der ersten Ausführungsform einmünden, drehbar aufgenommener Drehschieber 21a begrenzt mit seinem einen Stirnende in der Ventilbohrung eine Ventilkammer 22a, welche in ständig offener Verbindung mit dem Ventilanschluß 16_17 für die Wandlerrücklaufleitung 17 steht und eine spiralförmige Bimetallfeder 20a aufnimmt, deren eines Federende am Ventilgehäuse 29 und deren anderes Federende am Drehschieber 21a verankert ist. Der Drehschieber 21a weist in seinem axial mittleren Bereich eine Umfangsnut 42 auf, welche mit dem Ventilanschluß 16_19 für die mit dem Getriebe 11 gemäß Fig. 2 direkt verbundene Leitung 19 in ständig offener Verbindung steht. Der Drehschieber 21a weist axial beiderseits der Umfangsnut 42 jeweils zwei Steuertaschen 21a-1 und 21a_2 bzw. 21a_ 3 und 21a_4 auf, von denen die axial inneren Steuertaschen 21a_2 und 21a_3 mit der Umfangsnut 42 und die axial äußeren Steuertaschen 21a_1 und 21a_4 mit einem axialen Ventildurchgang 23a des Drehschiebers 21a jeweils in ständig offener Verbindung stehen, wobei der Ventildurchgang 23a offen in die Ventilkammer 22a ausmündet. Als Drehwinkelbegrenzung für den Drehschieber 21a ist ein Anschlagbolzen 43 im Ventilgehäuse 29 verwendet, der in einen Schlitz 44 an der zur Ventilkammer 22a entgegengesetzten Stirnseite des Drehschiebers 21a eingreift.

Die Steuertasche 21a_1 liegt wirkungsmäßig zwischen den Ventilanschlüssen 16_17 und 16_13. Die Steuertasche 21a_2 liegt wirkungsmäßig zwischen den Ventilanschlüssen 16_13 und 16_19. Die Steuertasche 21a_2 liegt in Drehrichtung so zum Ventilanschluß 16_13, daß eine ständige Druckverbindung 25a entsprechend der Druckverbindung 25 in Fig. 3(A) aufrechterhalten bleibt. Die Steuertasche 21a_3 liegt wirkungsmäßig zwicken den Ventilanschlüssen 16_19 und 16_18. Die Steuertasche 21a_4 liegt wirkungsmäßig zwischen der Ventilkammer 22a und dem Ventilanschluß 16_18.

Die Kennung der Bimetallfeder 20a und die Lage der Steuertaschen zu den Ventilanschlüssen sind so auf die Temperatur des Arbeitsöles im Drehmomentwandler 12 abgestimmt, daß sich für das Steuerventil 16a die gleiche Wirkungsweise wie für das Steuerventil 16 der Fign. 1 bis 3 ergibt, so daß auf die diesbezügliche Beschreibung des Steuerventiles 16 verwiesen werden kann.

Das Steuerventil 16a ist in den Fign. 4 bis 8 in einer Stellung gezeichnet, die es in der mittleren Temperaturphase entsprechend Fig. 3(B) einnimmt und in welcher die Wandlerrücklaufleitung 17 (durch die Steuertasche 21a_1) sowohl mit der Wandlerzulaufleitung 13 als auch (durch die Steuertasche 21a_4) mit der Kühlervorlaufleitung 18 verbunden ist, während die mit dem Getriebe 11 direkt verbundene Leitung 19 (durch die Steuertasche 21a_2) sowohl mit der Wandlerzulaufleitung 13 als auch (durch die Steuertasche 21a_3) mit der Kühlervorlaufleitung 18 verbunden ist.

Bei der Ausführungsform der Fign. 9 und 10 ist für das Steuerventil ebenfalls ein Drehschieberventil 16b verwendet, bei dem jedoch der Ventilanschluß 16_13 für die Wandlerzulaufleitung 13, der Ventilanschluß 16_17 für die Wandlerrücklaufleitung 17, der Ventilanschluß 16_18 für die Kühlervorlaufleitung 18 und der Ventilanschluß 16_19 für die mit dem Getriebe 11 direkt verbundene Leitung 19 jeweils in einer gemeinsamen drehachsnormalen Ebene 30-30 des Ventilgehäuses 29 liegen. In einer Ventilbohrung des Ventilgehäuses 29 ist ein ringförmiger Drehschieber 21b drehbar aufgenommen, welcher eine zentrische Ventilkammer 22b einschließt, welche mit drei taschenförmigen Ausnehmungen 43, 44 und 45 am Umfang des Drehschiebers 21b in ständig offener Verbindung steht, von denen die mittlere Ausnehmung 44 ihrerseits ständig mit dem Ventilanschluß 16_17 für die Wandlerrücklaufleitung 17 in offener Verbindung steht. Der Drehschieber 21b weist an seinem Umfang eine Umfangsnut 42b auf, welche mit dem Ventilanschluß 16_19 für die mit dem Getriebe 11 direkt verbundene Leitung 19 in ständig offener Verbindung steht und in Umfangsrichtung durch zwei Steuerkanten 21b_2 und 21b_3 begrenzt wird. Die Ausnehmung 43 wird in der auf die Umfangsnut 42b weisenden Umfangsrichtung durch eine Steuerkante 21b_1 begrenzt, welche wirkungsmäßig zwischen den Ventilanschlüssen 16_13 und 16_17 liegt. Die Ausnehmung 45 wird in der auf die Umfangsnut 42b weisenden Umfangsrichtung durch eine Steuerkante 21b_4 begrenzt, welche wirkungsmäßig zwischen den Ventilanschlüssen 16_17 und 16_18 liegt. Die Steuerkante 21b_2 liegt wirkungsmäßig zwischen den Ventilanschlüssen 16_13 und 16_19. Die Steuerkante 21b_3 liegt wirkungsmäßig zwischen den Ventilanschlüssen 16_18 und 16_19.

Die Kennung der Bimetallfeder 20b und die Lage der Steuerkanten gegenüber den Ventilanschlüssen sind so auf die Temperatur des Arbeitsöles im Drehmomentwandler 12 abgestimmt, daß sich die anhand der Fign. 3(A) bis 3(C) für die erste Ausführungsform erläuterte Wirkungsweise auch für das Steuerventil 16b ergibt, so daß auf die diesbezügliche Beschreibung der ersten Ausführungsform der Fign. 1 bis 3 verwiesen werden kann.

In den Fign. 9 und 10 ist das Steuerventil 16b in einer Stellung gezeichnet, welche es in der mittleren Temperaturphase gemäß Fig. 3(B) einnimmt. In dieser Stellung sind einerseits die Wandlerrücklaufleitung 17 sowohl mit der Wandlerzulaufleitung 13 über die Ausnehmung 43 als auch mit der Kühlervorlaufleitung 18 über die Ausnehmung 45 und andererseits die mit dem Getriebe 11 direkt verbundene Leitung 19 durch die Umfangsnut 42b sowohl mit der Wandlerzulaufleitung 13 als auch mit der Kühlervorlaufleitung 18 verbunden.

Um einen bestimmten Druck im Drehmomentwandler 12 aufrecht zu erhalten bzw. zu sichern, ist die Steuerkante 21b_2 so zum Ventilanschuß 16_13 angeordnet, daß eine ständige Druckverbindung 25b zwischen der unter höherem Druck stehenden Leitung 19 und der Wandlerzulaufleitung 13 gebildet ist.

## Patentansprüche

1. Anordnung zum Steuern der Temperatur eines hydraulischen Betriebsmittels ' " für ein selbsttätig schaltendes Getriebe (11) und einen hydrodynamischen Drehmomentwandler (12) mit einer Wandlerzulaufleitung (13) für das Betriebsmittel, bei der ein Kühler (14) für die Wärmeabgabe des Betriebsmittels mit einer zum Getriebe führenden Kühlerrücklaufleitung und ein in Abhängigkeit von der Temperatur des Betriebsmittels arbeitendes Steuerventil (16;16a;16b) verwendet sowie eine vom Drehmomentwandler abgehende Wandlerrücklaufleitung (17), eine zum Kühler führende Kühlervorlaufleitung (18) und eine mit dem Getriebe direkt verbundene Leitung (19) so an das Steuerventil angeschlossen sind, daß in einer Temperaturen niedriger als ein Grenzwert umfassenden unteren Temperaturphase sowohl die Wandlerrücklaufleitung (17) gegenüber der Kühlervorlaufleitung abgesperrt als auch die mit dem Getriebe direkt verbundene Leitung mit einer ersten der an das Steuerventil angeschlossenen Leitungen verbunden ist, während in einer Temperaturen höher als der Grenzwert umfassenden oberen Temperaturphase sowohl die Wandlerrücklaufleitung mit der Kühlervorlaufleitung als auch die mit dem Getriebe direkt verbundene Leitung mit einer zweiten der an das Steuerventil angeschlossenen Leitungen verbunden ist,
**dadurch gekennzeichnet**,
daß an das Steuerventil (16 oder 16a oder 16b) zusätzlich noch die Wandlerzulaufleitung (13) angeschlossen ist, daß in der unteren Temperaturphase (Fig. 3A) sowohl die Wandlerrücklaufleitung (17) mit der Wandlerzulaufleitung (13) als auch die mit dem Getriebe (11) direkt verbundene Leitung (19) mit der Kühlervorlaufleitung (18) verbunden sind, und daß in der oberen Temperaturphase (Fig. 3C) die Wandlerzulaufleitung (13) mit der mit dem Getriebe (11) direkt verbundenen Leitung (19) verbunden ist.

2. Anordnung nach Anspruch 1,
**dadurch gekennzeichnet,**
daß ein erster Grenzwert (T_G1) auf eine relativ niedrigere Temperatur (≅ 100°C) und ein zweiter Grenzwert (T_G2) auf eine höhere Temperatur (≅ 120°C) festgelegt sind und in der zwischen den Grenzwerten (T_G1 und T_G2) liegende Temperaturen (100°C bis 120°C) umfassenden mittleren Temperaturphase (Fig. 3B) die Wandlerrücklaufleitung (17) sowöhl mit der Wandlerzulaufleitung (13) als auch mit der Kühlervorlaufleitung (18) verbunden und andererseits die mit dem Getriebe (11) direkt verbundene Leitung (19) sowohl mit der Wandlerzulaufleitung (13) als auch mit der Kühlervorlaufleitung (18) verbunden sind.

3. Anordnung nach Anspruch 1 oder 2,
**dadurch gekennzeichnet,**
daß der erste Grenzwert (T_G1) für die untere Temperaturphase (Fig. 3A) etwa 100°C beträgt.

4. Anordnung nach einem der Ansprüche 1 bis 3,
**dadurch gekennzeichnet,**
daß der zweite Grenzwert (T_G2) für die obere Temperaturphase (Fig. 3C) etwa 120°C beträgt.

5. Anordnung nach einem der Ansprüche 1 bis 4,
**dadurch gekennzeichnet,**
daß das Steuerventil (16 oder 16a oder 16b) als 4-Wege-Ventil ausgebildet ist.

6. Anordnung nach einem der Ansprüche 1 bis 5,
**dadurch gekennzeichnet,**
daß das Steuerventil (16 oder 16a oder 16b) durch eine Bimetallfeder (20 oder 20a oder 20b) betätigt wird.

7. Anordnung nach Anspruch 6,
**dadurch gekennzeichnet,**
daß das Steuerventil (16 oder 16a oder 16b) einen Steuerkolben (21 oder 21a oder 21b) und eine durch den Steuerkolben (21 oder 21a oder 21b) begrenzte Ventilkammer (22 oder 22a oder 22b) aufweist, und daß die Bimetallfeder (20 oder 20a oder 20b) in der mit der Wandlerrücklaufleitung (17) in offener Verbindung stehenden Ventilkammer (22 oder 22a oder 22b) aufgenommen ist.

8. Anordnung nach einem der Ansprüche 1 bis 7,
**dadurch gekennzeichnet,**
daß der Steuerkolben (21 oder 21a oder 21b) einen mit der Wandlerrücklaufleitung (17) in ständig offener Verbindung stehenden Ventildurchgang (23 oder 23a oder 43, 44, 45) aufweist.

9. Anordnung nach Anspruch 8,
**dadurch gekennzeichnet,**
daß der Ventildurchgang (23) eine mit der mit dem Getriebe (11) direkt verbundenen Leitung (19) in ständiger Verbindung stehende Entlüftungsöffnung (24 in Fig. 3C) aufweist.

10. Anordnung nach einem der Ansprüche 1 bis 9,
**dadurch gekennzeichnet,**
daß das Steuerventil (16 oder 16a oder 16b) eine ständig offene Verbindung (25 oder 25a oder 25b) zwischen der Wandlerzulaufleitung (13) und der mit dem Getriebe (11) direkt verbundenen Leitung (19) aufweist.

11. Anordnung nach einem der Ansprüche 1 bis 10,
**dadurch gekennzeichnet,**
daß sich der Steuerkolben (21) einerseits an der Bimetallfeder (20) und andererseits an einer metallischen Rückstellfeder (26) abstützt.

12. Anordnung nach einem der Ansprüche 1 bis 11,
**dadurch gekennzeichnet,**
daß die Kühlerrücklaufleitung (15) unter Umgehung des Steuerventiles (16 oder 16a oder 16b) mit dem Getriebe (11) verbunden ist.

13. Anordnung nach einem der Ansprüche 1 bis 12,
**dadurch gekennzeichnet,**
daß als Steuerventil ein Drehschieberventil (16a oder 16b) verwendet ist.

14. Anordnung nach Anspruch 13,
**dadurch gekennzeichnet,**
daß die gesteuerten Ventilanschlüsse (16_13, 16_17, 16_18 und 16_19) in einer die Drehachse (27-27) enthaltenden Ebene (28-28) des Ventilgehäuses (29) angeordnet sind.

15. Anordnung nach Anspruch 13,
**dadurch gekennzeichnet,**
daß die gesteuerten Ventilanschlüsse (16_13, 16_17, 16_18 und 16_19) in einer drehachsnormalen Ebene (30-30) des Ventilgehäuses (29) angeordnet sind.

## Claims

1. An arrangement to control the temperature of a hydraulic operating medium for an automatic transmission (11) and a hydrodynamic torque converter (12) with a converter feed line (13) for the operating medium in which a cooler (14) for the heat emitted by the operating medium with a cooler return line leading to the transmission (11) and a control valve (16 or 16a or 16b) which works in dependence on the temperature of the operating medium is used and a converter return line (17), a cooler forward line (18) leading to the cooler and a line (19) which is connected directly to the transmission (11) are connected to the control valve in such a manner that in a lower temperature phase covering temperatures lower than a limit value the converter return line (17) is disconnected from the cooler forward line (18) and the line (19) which is connected directly to the transmission (11) is connected to a first ofthe lines connected to the control valve, while in an upper temperature phase covering temperatures higher than the limit value the converter return line (17) is connected to the cooler forward line (18) and the line (19) which is connected directly to the transmission is connected to a second of the lines connected to the control valve,
**characterised in that**
also connected to the control valve (16 or 16a or 16b) is the converter feed line (13), that in the lower temperature phase (Fig. 3A) the converter return line (17) is connected to the converter feed line (13) and the line (19) which is directly connected to the transmission (11) is connected to the cooler forward line (18), and that in the upper temperature phase (Fig. 3C) the converter feed line (13) is connected to the line (19) which is connected directly to the transmission (11).

2. An arrangement in accordance with Claim 1,
**characterised in that**
a first limit value (T.G1) is set at a relatively lower temperature (≅ 100°C) and a second limit value (T.G2) is set a higher temperature (≅ 120°C) and in the mid temperature phase (Fig. 3B) covering the temperatures between the limit values (T.G1 and T.G2) (100°C to 120°C), the converter return line (17) is connected to both the converter feed line (13) and the cooler forward line (18) and the line (19) which is connected directly to the transmission (11) is connected to both the converter return line (13) and to the cooler forward line (18).

3. An arrangement in accordance with Claim 1 or 2,
**characterised in that**
the first limit value (T.G1) for the lower temperature phase (Fig. 3A) is approximately 100°C.

4. An arrangement in accordance with one of Claims 1 to 3,
**characterised in that**
the first second value (T.G2) for the upper temperature phase (Fig. 3C) is approximately 120°C.

5. An arrangement in accordance with one of Claims 1 to 4,
**characterised in that**
the control valve (16 or 16a or 16b) is designed as a 4-way valve.

6. An arrangement in accordance with one of Claims 1 to 5,
**characterised in that**
the control valve (16 or 16a or 16b) is actuated by a bi-metal spring (20 or 20a or 20b).

7. An arrangement in accordance with Claim 6,
**characterised in that**
the control valve (16 or 16a or 16b) has a control piston (21 or 21a or 21b) and a valve chamber (22 or 22a or 22b) delimited by the control piston (21 or 21a or 21b), and that the bi-metal spring (20 or 20 a or 20b) is located in the valve chamber (22 or 22a or 22b) which connects with the converter return line (17).

8. An arrangement in accordance with one of Claims 1 to 7,
**characterised in that**
the control piston (21 or 21a or 21b) has a valve opening (23 or 23a or 43, 44, 45) which connects at all times with the converter return line (17).

9. An arrangement in accordance with Claim 8,
**characterised in that**
the valve opening (23) has a bleed opening (24 in Fig. 3C) which connects at all times with the line (19) which is connected directly to the transmission (11).

10. An arrangement in accordance with one of Claims 1 to 9,
**characterised in that**
the control valve (16 or 16a or 16b) has a constantly open connection (25 or 25a or 25b) between the converter feed line (13) and the line (19) which is connected directly to the transmission (11).

11. An arrangement in accordance with one of Claims 1 to 10,
**characterised in that**
the control piston (21) is supported on one hand by the bi-metal spring (20) and on the other by a metal return spring (26).

12. An arrangement in accordance with one of Claims 1 to 11,
**characterised in that**
the cooler return line (15) is connected to the transmission (11) bypassing the control valve (16 or 16a or 16b).

13. An arrangement in accordance with one of Claims 1 to 12,
**characterised in that**
a rotary valve (16a or 16b) is used as the control valve.

14. An arrangement in accordance with Claim 13,
**characterised in that**
the controlled valve connections (16.13, 16.17, 16.18 and 16.19) are positioned in a plane (28-28) of the valve housing (29) containing the axis of rotation (27-27).

15. An arrangement in accordance with Claim 13,
**characterised in that**
the controlled valve connections (16.13, 16.17, 16.18 and 16.19) are positioned in the plane (30-30) ofthe normal axis of rotation ofthe valve housing (29).

## Revendications

1. Système pour commander la température d'un fluide de fonctionnement hydraulique pour une boîte de vitesses automatique (11) et un convertisseur de couple hydrodynamique (12) avec une conduite d'alimentation de convertisseur (13) pour le fluide de fonctionnement, dans lequel sont utilisés un radiateur (14) pour céder la chaleur du fluide de fonctionnement, avec une conduite de retour de radiateur menant à la boîte de vitesses et une soupape de commande (16; 16a; 16b) agissant en fonction de la température du fluide de fonctionnement, et dans lequel une conduite de retour de convertisseur (17) partant du convertisseur de couple, une conduite d'aller de radiateur (18) menant au radiateur et une conduite (19) reliée directement à la boîte de vitesses sont raccordées à la soupape de commande, de manière que, dans une phase de température inférieure, englobant des températures inférieures à une valeur limite, la conduite de retour de convertisseur (17) soit coupée de la conduite d'aller de radiateur et la conduite reliée directement à la boîte de vitesses soit en même temps reliée à une première des conduites raccordées à la soupape de commande, tandis que, dans une phase de température supérieure, englobant des températures supérieures à la valeur limite, la conduite de retour de convertisseur est reliée à la conduite d'aller de radiateur et la conduite reliée directement à la boîte de vitesses est en même temps reliée à une deuxième des conduites raccordées à la soupape de commande,
caractérisé en ce que
la conduite d'alimentation de convertisseur (13) est raccordée en plus à la soupape de commande (16 ou 16a ou 16b), en ce que, dans la phase de température inférieure (figure 3A), la conduite de retour de convertisseur (17) est reliée à la conduite d'alimentation de convertisseur (13) et la conduite (19) reliée directement à la boîte de vitesses (11) est en même temps reliée à la conduite d'aller de radiateur (18), et que, dans la phase de température supérieure (figure 3C), la conduite d'alimentation de convertisseur (13) est reliée à la conduite (19) reliée directement à la boite de vitesses (11).

2. Système selon la revendication 1, caractérisé en ce qu'une première valeur limite (T-G1) est fixée à une température relativement basse (= 100°C) et une deuxième valeur limite (T-G2) est fixée à une température plus élevée (= 120°C) et, dans la phase de température médiane (figure 3B), englobant les températures (100°C à 120°C) comprises entre les valeurs limites (T-G1 et T-G2), la conduite de retour de convertisseur (17) est reliée à la fois à la conduite d'alimentation de convertisseur (13) et à la conduite d'aller de radiateur (18) et, par ailleurs, la conduite (19) reliée directement à la boîte de vitesses (11), est reliée à la fois à la conduite d'alimentation de convertisseur (13) et à la conduite d'aller de radiateur (18).

3. Système selon la revendication 1 ou 2, caractérisé en ce que la première valeur limite (T-G1) pour la phase de température inférieure (figure 3A) est d'environ 100°C.

4. Système selon une des revendications 1 à 3, caractérisé en ce que la deuxième valeur limite (T-G2) pour la phase de température supérieure (figure 3C) est d'environ 120°C.

5. Système selon une des revendications 1 à 4, caractérisé en ce que la soupape de commande (16 ou 16a ou 16b) est réalisée comme un distributeur à 4 voies.

6. Système selon une des revendications 1 à 5, caractérisé en ce que la soupape de commande (16 ou 16a ou 16b) est actionnée par un ressort bimétallique (20 ou 20a ou 20b).

7. Système selon la revendication 6, caractérisé en ce que la soupape de commande (16 ou 16a ou 16b) comporte un piston de commande ou tiroir (21 ou 21a ou 21b) et une chambre de soupape (22 ou 22a ou 22b) délimitée par le tiroir (21 ou 21a ou 21b), et que le ressort bimétallique (20 ou 20a ou 20b) est logé dans la chambre de soupape (22 ou 22a ou 22b), laquelle est en liaison ouverte avec la conduite de retour de convertisseur (17).

8. Système selon une des revendications 1 à 7, caractérisé en ce que le tiroir (21 ou 21a ou 21b) présente un passage de soupape (23 ou 23a ou 43, 44, 45) qui est en permanence en liaison ouverte avec la conduite de retour de convertisseur (17).

9. Système selon la revendication 8, caractérisé en ce que le passage de soupape (23) présente un orifice de purge d'air (24 sur figure 3C) qui est en liaison permanente avec la conduite (19) reliée directement à la boîte de vitesses (11).

10. Système selon une des revendications 1 à 9, caractérisé en ce que la soupape de commande (16 ou 16a ou 16b) présente une liaison (25 ou 25a ou 25b) ouverte en permanence entre la conduite d'alimentation de convertisseur (13) et la conduite (19) reliée directement à la boîte de vitesses (11).

11. Système selon une des revendications 1 à 10, caractérisé en ce que le tiroir (21) s'appuie d'un côté sur le ressort bimétallique (20) et de l'autre côté sur un ressort de rappel métallique (26).

12. Système selon une des revendications 1 à 11, caractérisé en ce que la conduite de retour de radiateur (15) est reliée à la boîte de vitesses (11) en contournant la soupape de commande (16 ou 16a ou 16b).

13. Système selon une des revendications 1 à 12, caractérisé en ce que la soupape de commande utilisée est un distributeur à tiroir rotatif (16a ou 16b).

14. Système selon la revendication 13, caractérisé en ce que les raccords de soupape commandés (16-13, 16-17, 16-18 et 16-19) sont disposés dans un plan (28-28) du corps de soupape (29) contenant l'axe de rotation (27-27).

15. Système selon la revendication 13, caractérisé en ce que les raccords de soupape commandés (16-13, 16-17, 16-18 et 16-19) sont disposés dans un plan (30-30) du corps de soupape (29) qui est normal à l'axe de rotation.
